# EUROPEAN PATENT APPLICATION

(11) **EP 3 506 477 A1**
(43) Date of publication of application: **03.07.2019**
(21) Application number: 17842978.3
(22) Date of filing: 25.08.2017
(51) Int. Cl.: H02M 3/155, H02J 7/36

(54) **ELECTRONIC CIGARETTE POWER SUPPLY CIRCUIT**

(30) Priority: 26.08.2016 CN 201620957092 U
(71) Applicant: Joyetech Europe Holding GmbH, 6303 Zug (CH)
(72) Inventor: QIU, Weihua, Changzhou Jiangsu 213125 (CN)
(74) Representative: Zaboliene, Reda
(86) International application number: PCT/CN2017/098999
(87) International publication number: WO 2018/036556

(57) **Abstract**

A power supply circuit for electronic cigarettes includes a first power unit, a second power unit, a first switch unit, a second switch unit, and a third switch unit. An outgoing line of a positive electrode of the first power unit is a positive output terminal of the power supply circuit. An outgoing line of a negative electrode of the second power unit is a negative output terminal of the power supply circuit. A negative electrode of the first power unit is electrically connected to the negative output terminal through the first switch unit. A positive electrode of the second power unit is electrically connected to the positive output terminal through the second switch unit. The third switch unit is electrically connected between the negative electrode of the first power unit and the positive electrode of the second power unit. When each of the first switch unit and the second switch unit is close, and the third switch unit is open, and when each of the first switch unit and the second switch unit is open, and the third switch unit is close. An electronic cigarette employing the power supply circuit is also presented.

## Description

### FIELD

The present disclosure relates to power source, particularly relates to a power supply circuit for an electronic cigarette and an electronic cigarette.

### BACKGROUND

Small electronic devices, such as electronic cigarettes, need a battery for power supply. Conventional batteries provide a constant voltage after being mounted to the electronic devices. Therefore, voltages in series connections and parallel connections of a power supply circuit of the electronic device cannot be changed according to different voltage requirements of the electronic device.

Thus, there is room for improvement within the art.

### SUMMARY

A power supply circuit for electronic cigarettes includes a first power unit, a second power unit, a first switch unit, a second switch unit, and a third switch unit. An outgoing line of a positive electrode of the first power unit is a positive output terminal of the power supply circuit. An outgoing line of a negative electrode of the second power unit is a negative output terminal of the power supply circuit. A negative electrode of the first power unit is electrically connected to the negative output terminal through the first switch unit. A positive electrode of the second power unit is electrically connected to the positive output terminal through the second switch unit. The third switch unit is electrically connected between the negative electrode of the first power unit and the positive electrode of the second power unit. When each of the first switch unit and the second switch unit is close, and the third switch unit is open, and when each of the first switch unit and the second switch unit is open, and the third switch unit is close. An electronic cigarette employing the power supply circuit is also presented. The power supply circuit may switch the power units to be electrically connected in parallel and in series through switch units. Therefore, the power supply circuit can be widely and conveniently used.

### BRIEF DESCRIPTION OF THE DRAWINGS

Many aspects of the disclosure can be better understood with reference to the following drawings. The components in the drawings are not necessarily drawn to scale, the emphasis instead being placed upon clearly illustrating the principles of the disclosure. Moreover, in the drawings, like reference numerals designate corresponding parts throughout the several views.
FIG. 1 is a circuit diagram of an embodiment of a power supply circuit with three branch power supply circuits.
FIG. 2 is a circuit diagram of an embodiment of a power supply circuit with two branch power supply circuits.

### DETAILED DESCRIPTION

In order to make the above-mentioned objects, features and advantages of the present implementation more obvious, a detailed description of specific embodiments of the present implementation will be described in detail with reference to the accompanying drawings. A number of details are set forth in the following description so as to fully understand the present implementation. However, the present implementation can be implemented in many other ways different from those described herein, and those skilled in the art can make similar improvements without violating the contents of the present implementation. Therefore, the present implementation is not to be considered as limiting the scope of the embodiments described herein.

Several definitions that apply throughout this disclosure will now be presented.

Unless otherwise defined, all technical and scientific terms used herein have the same meaning as commonly understood by one skilled in the art. The terms used in a specification of the present implementation herein are only for describing specific embodiments, and are not intended to limit the present implementation. The terms "and/or" used herein includes any and all combinations of one or more of associated listed items.

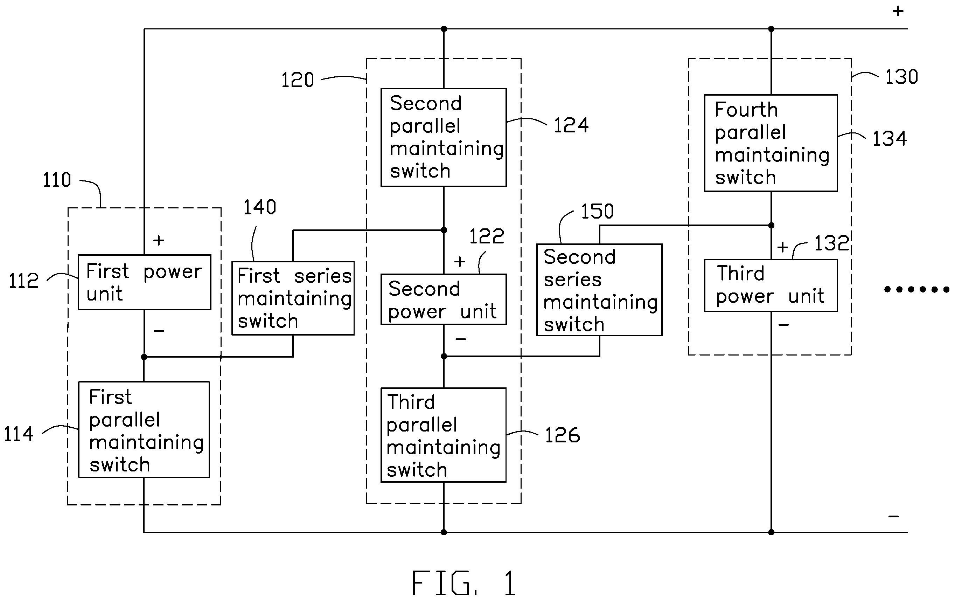

FIG. 1 shows a circuit diagram of at least one embodiment of a power supply circuit. The power supply circuit is configured for electronic devices, such as electronic cigarette. The power supply circuit has a simple structure and a low cost. Referring to FIG. 1, the power supply circuit includes a first branch power supply circuit 110, a second branch power supply circuit 120, and a third branch power supply circuit 130. Specifically, the first branch power supply circuit 110 includes a first power unit 112 and a first parallel maintaining switch 114 connected in series. The second branch power supply circuit 120 includes a second power unit 122, a second parallel maintaining switch 124, and a third parallel maintaining switch 126 connected in series. The third branch power supply circuit 130 includes a third power unit 132 and a fourth parallel maintaining switch 134 connected in series.

A first series maintaining switch 140 is electrically connected between the first branch power supply circuit 110 and the second branch power supply circuit 120. One end of the first series maintaining switch 140 is electrically connected to a negative electrode of the first branch power supply circuit 110, the other end of the first series maintaining switch 140 is electrically connected to a positive electrode of the second branch power supply circuit 120. A second series maintaining switch 150 is electrically connected between the second branch power supply circuit 120 and the third branch power supply circuit 130. One end of the second series maintaining switch 150 is electrically connected to a negative electrode of the second branch power supply circuit 120, the other end of the second series maintaining switch 150 is electrically connected to a positive electrode of the third branch power supply circuit 130.

The first parallel maintaining switch 114, the second parallel maintaining switch 124, the third parallel maintaining switch 126, the fourth parallel maintaining switch 134, and the first series maintaining switch 140, the second series maintaining switch 150 are configured as follows:

When each of the first parallel maintaining switch 114, the second parallel maintaining switch 124, the third parallel maintaining switch 126, and the fourth parallel maintaining switch 134 are close, each of the first series maintaining switch 140 and the second series maintaining switch 150 are open. Thus, the first power unit 112, the second power unit 122, and the third power unit 132 are connected in parallel for providing of a higher electric power.

Alternatively, when each of the first parallel maintaining switch 114, the second parallel maintaining switch 124, the third parallel maintaining switch 126, and the fourth parallel maintaining switch 134 are open, each of the first series maintaining switch 140 and the second series maintaining switch 150 are close. Thus, the first power unit 112, the second power unit 122, and the third power unit 132 are connected in series for providing a higher voltage.

In at least one embodiment, according to different series connection directions, positive electrodes and negative electrodes of the first and the fourth parallel maintaining switches 114, 134 of the first and the third branch power supply circuits 110, 130, which are on two sides of the power supply circuit, can be adjusted correspondingly. Referring to FIG. 1, the first branch power supply circuits 110 is on the left side, the first parallel maintaining switch 114 is electrically connected to a negative electrode of the first power unit 112; the third branch power supply circuits 130 is on the right side, the fourth parallel maintaining switch 134 is electrically connected to a positive electrode of the third power unit 132.

When the series connection direction is changed, in the first branch power supply circuits 110 on the left side, the first parallel maintaining switch 114 can be electrically connected to a positive electrode of the first power unit 112; in the third branch power supply circuits 130 on the right side, the fourth parallel maintaining switch 134 can be electrically connected to a negative electrode of the third power unit 132. Meanwhile, connections of the first series maintaining switch 140 and the second series maintaining switch 150 are changed correspondingly. Specifically, one end of the first series maintaining switch 140 is electrically connected to a positive electrode of the first branch power supply circuit 110, the other end of the first series maintaining switch 140 is electrically connected to a negative electrode of the second branch power supply circuit 120. One end of the second series maintaining switch 150 is electrically connected to a positive electrode of the second branch power supply circuit 120, the other end of the second series maintaining switch 150 is electrically connected to a negative electrode of the third branch power supply circuit 130.

In at least one embodiment, circuits with series connections and parallel connections switching demands may include at least two branch power supply circuits. When there are two branch power supply circuits, each of the branch power supply circuits may include only one parallel maintaining switch. When there are three or more branch power supply circuits, the branch power supply circuits on two sides (such as the first branch power supply circuit 110 and the third branch power supply circuit 130) may include at least one parallel maintaining switch, the branch power supply circuit(s) in the middle (such as the second branch power supply circuit 120) may include at least two parallel maintaining switches. In this embodiment, FIG. 1 illustrates that the first branch power supply circuit 110 and the third branch power supply circuit 130 respectively include one parallel maintaining switch, and the second branch power supply circuit 120 includes two parallel maintaining switches.

In at least one embodiment, the parallel maintaining switches and the series maintaining switches may be triodes and be controlled to open and close by a control unit.

Additionally, each of the branch power supply circuits may further include an anti-reverse unit in series connection with the power unit, which is configured to switch off the circuit when polarity reversal of the power units happens, thus to protect the circuit. The anti-reverse unit includes a triode and an anti-reverse MOSFET connected in series. In at least one embodiment, a model of the anti-reverse MOSFET can be but is not limited to AON6411.

In at least one embodiment, the power units can be rechargeable batteries, such as lithium batteries. The power units can be other kinds of batteries, such as alkaline dry cells, nickel metal hydride batteries, nickel-cadmium batteries, lead acid batteries, nickel iron batteries, nickel metal hydride batteries, zinc silver batteries, zinc nickel batteries, hydrogen-oxygen fuel cells, solar cells, etc.

The power supply circuit may include more branch power supply circuits other than the three branch power supply circuits 110, 120, 130. Connections for the more branch power supply circuits can be similarly arranged as the connections of the three branch power supply circuits 110, 120, 130. The power supply circuit may include less branch power supply circuits than three.

In another embodiment, the power supply circuit includes two branch power supply circuits, which are described below.

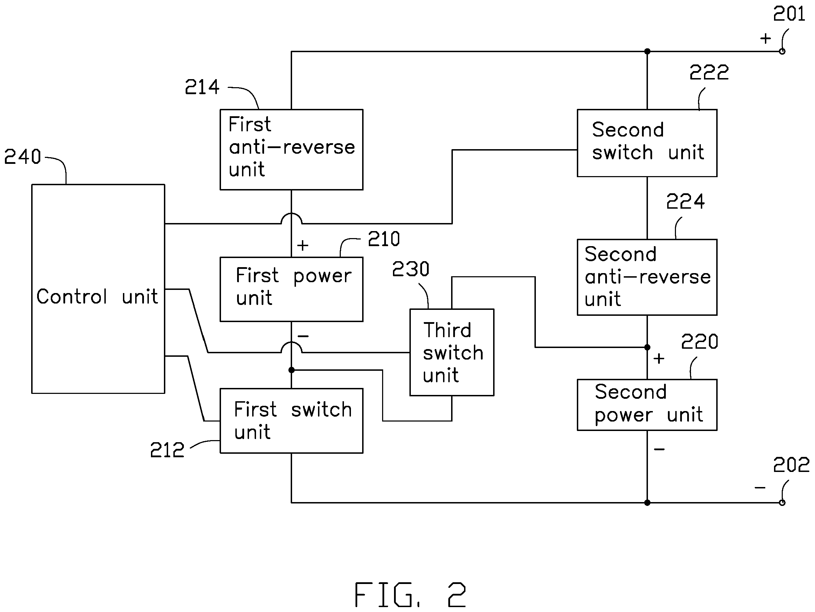

FIG. 2 shows a circuit diagram of at least one embodiment of a power supply circuit including a first power unit 210 and a second power unit 220. An outgoing line of a positive electrode (+) of the first power unit 210 is set to be a positive output terminal 201 of the power supply circuit, an outgoing line of a negative electrode (-) of the second power unit 220 is set to be a negative output terminal 202 of the power supply circuit. A negative electrode (-) of the first power unit 210 is electrically connected to the negative output terminal 202 through a first switch unit 212. A positive electrode (+) of the second power unit 220 is electrically connected to the positive output terminal 201 through a second switch unit 222. A third switch unit 230 is electrically connected between the negative electrode (-) of the first power unit 210 and the positive electrode (+) of the second power unit 220.

The first switch unit 212, the second switch unit 222, and the third switch unit 230 are configured as follows:

When each of the first switch unit 212 and the second switch unit 222 is close, and the third switch unit 230 is open. Thus, the first power unit 210 and the second power unit 220 are connected in parallel for providing a higher electric power. Alternatively, when each of the first switch unit 212 and the second switch unit 222 is open, and the third switch unit 230 is close. Thus, the first power unit 210 and the second power unit 220 are in connected series for providing a higher voltage.

In at least one embodiment, the first switch unit 212, the second switch unit 222, and the third switch unit 230 can be triodes, which are simple and easy to control.

Additionally, referring to FIG. 2, the first power unit 210 may be further electrically connected to a first anti-reverse unit 214 in series; the second power unit 220 may be further electrically connected to a second anti-reverse unit 224 in series. The first anti-reverse unit 214 and the second anti-reverse unit 224 can be configured to switch off the circuit when polarity reversal of the power units happens, thus to protect the circuit. Each of the first anti-reverse unit 214 and the second anti-reverse unit 224 includes a triode and an anti-reverse MOSFET connected in series. In at least one embodiment, a model of the anti-reverse MOSFET can be but is not limited to AON6411.

Additionally, referring to FIG. 2, the power supply circuit may further include a control unit 240. The control unit 240 is electrically connected to and is configured to control the first switch unit 212, the second switch unit 222, and the third switch unit 230. The control unit 240 can be but is not limited to a single chip microcomputer (SCM). The single chip microcomputer is electrically connected to and is configured to control the first switch unit 212, the second switch unit 222, and the third switch unit 230 through an input output interface.

In at least one embodiment, the first power unit 210 and the second power unit 220 can be batteries, such as lithium batteries. The first power unit 210 and the second power unit 220 can be other kinds of batteries, such as alkaline dry cells, nickel metal hydride batteries, nickel-cadmium batteries, lead acid batteries, nickel iron batteries, nickel metal hydride batteries, zinc silver batteries, zinc nickel batteries, hydrogen-oxygen fuel cells, solar cells, etc. In other embodiments, the power supply circuit can be a power unit for forming a cascade power supply circuit.

The power supply circuit may switch the power units to be electrically connected in parallel and in series through switch units. Therefore, the power supply circuit can be widely and conveniently used.

It is to be understood, even though information and advantages of the present embodiments have been set forth in the foregoing description, together with details of the structures and functions of the present embodiments, the disclosure is illustrative only; changes may be made in detail, especially in matters of shape, size, and arrangement of parts within the principles of the present embodiments to the full extent indicated by the plain meaning of the terms in which the appended claims are expressed.

## Claims

1. A power supply circuit for electronic cigarettes, the power supply circuit comprising:
a first power unit, an outgoing line of a positive electrode of the first power unit being a positive output terminal of the power supply circuit;
a second power unit, an outgoing line of a negative electrode of the second power unit being a negative output terminal of the power supply circuit;
a first switch unit, a negative electrode of the first power unit being electrically connected to the negative output terminal through the first switch unit;
a second switch unit, a positive electrode of the second power unit being electrically connected to the positive output terminal through the second switch unit; and
a third switch unit being electrically connected between the negative electrode of the first power unit and the positive electrode of the second power unit, wherein:
when each of the first switch unit and the second switch unit is close, and the third switch unit is open, and
when each of the first switch unit and the second switch unit is open, and the third switch unit is close.

2. The power supply circuit of claim 1, wherein each of the first switch unit and the second switch unit is triode.

3. The power supply circuit of claim 1, wherein the first power unit is further electrically connected to a first anti-reverse unit in series; the second power unit is further electrically connected to a second anti-reverse unit in series.

4. The power supply circuit of claim 3, wherein each of the first anti-reverse unit and the second anti-reverse unit includes a triode and an anti-reverse MOSFET connected in series.

5. The power supply circuit of claim 1, further comprising a control unit, wherein the control unit is electrically connected to and is configured to control the first switch unit, the second switch unit, and the third switch unit.

6. The power supply circuit of claim 5, wherein the control unit is a single chip microcomputer electrically connected to and is configured to control the first switch unit, the second switch unit, and the third switch unit through an input output interface,.

7. The power supply circuit of claim 1, wherein each of the first power unit and the second power unit is a rechargeable lithium battery.

8. A power supply circuit for electronic cigarettes, the power supply circuit comprising:
at least two power units;
at least two parallel maintaining switches, each of the at least two power units being electrically connected to one of the parallel maintaining switches in series to form a branch power supply circuit, thereby the at least two power units and the at least two parallel maintaining switches forming at least two branch power supply circuits, the at least two branch power supply circuits being electrically connected in parallel;
at least one series maintaining switch being electrically connected between the at least two power units of the at least two branch power supply circuits, one end of the at least one series maintaining switch being electrically connected to a positive electrode of one of the at least two power units, the other end of the at least one series maintaining switch being electrically connected to a negative electrode of the other one of the at least two power units, wherein:
when each of the at least two parallel maintaining switches is close and the at least one series maintaining switch is open, and
when each of the at least two parallel maintaining switches is open and at least one series maintaining switch is close.

9. The power supply circuit of claim 8, wherein each of the at least two parallel maintaining switches and each of the at least one series maintaining switch is a triode.

10. The power supply circuit of claim 8, further comprising a control unit, wherein the control unit is electrically connected to and is configured to control the at least two parallel maintaining switches and the at least one series maintaining switch.

11. The power supply circuit of claim 8, wherein each of the at least two power units is further electrically connected to at least one anti-reverse unit in series.

12. The power supply circuit of claim 11, wherein the at least one anti-reverse unit includes a triode and an anti-reverse MOSFET connected in series.

13. The power supply circuit of any of claims 8 to 12, wherein each of the at least two power units is a rechargeable lithium battery.

14. An electronic cigarette comprising the power supply circuit of any of claims 1 to 7 or the power supply circuit of any of claims 8 to 13.
